# EUROPEAN PATENT APPLICATION

(11) **EP 2 750 030 A1**
(43) Date of publication of application: **02.07.2014**
(21) Application number: 13199191.1
(22) Date of filing: 20.12.2013
(51) Int. Cl.: G06F 9/44, G06F 11/14

(54) **Method, apparatus and processor for reading BIOS**

(30) Priority: 25.12.2012 CN 201210572239
(71) Applicant: Huawei Technologies Co., Ltd., Shenzhen, Guangdong 518129 (CN)
(72) Inventor: Gao, Qing, 518129 Shenzhen Guangdong (CN); Rao, Junyang, 518129 Shenzhen Guangdong (CN)
(74) Representative: Isarpatent

(57) **Abstract**

The present invention provides a method, an apparatus and a processor for reading a BIOS. The method includes: receiving a reset signal of a processor, and generating a first start address or a second start address according to the reset signal; and reading a BIOS in a storage chip according to the first start address or the second start address, where the first start address corresponds to a storage address of a primary BIOS stored in the storage chip, and the second start address corresponds to a storage address of a backup BIOS stored in the storage chip. In embodiments of the present invention, when reading the BIOS, the processor may generate the first start address or the second start address according to the reset signal, so as to read the primary BIOS or the backup BIOS, which may improve universality of BIOS reading.

## Description

### TECHNICAL FIELD

Embodiments of the present invention relate to computer technologies, and in particular, to a method, an apparatus and a processor for reading a BIOS.

### BACKGROUND

A central processing unit (Central Processing Unit, CPU) is a computing core and a control core of a computer system, and a basis input output system (Basis Input Output System, BIOS) is a program solidified on a Flash storage chip exterior of the CPU. When the computer system is started, the CPU needs to read the stored BIOS program from the Flash storage chip, so that the CPU can control operation of the whole computer system.

Currently, to improve operational reliability of the computer system, generally two BIOS programs including a primary BIOS and a backup BIOS are provided in the computer system. When the computer system is started, the CPU reads the primary BIOS from a Flash chip first. When the CPU encounters a fault in reading the primary BIOS, and the computer system needs to be restarted, the CPU will read the backup BIOS from the Flash chip, so as to ensure that the computer system can be started normally. In the prior art, to ensure that the CPU can automatically read the backup BIOS in the Flash chip after the computer system is restarted, generally a switching circuit is additionally provided between the CPU and the Flash chip, that is, a switching circuit is used to switch an address read by the CPU to a storage address of the backup BIOS. However, when the BIOS is read by additionally providing an external switching circuit in the prior art, the read address of the BIOS read by the CPU is unique. As a result, when a serial peripheral interface (Serial Peripheral Interface, SPI) Flash chip or an inter-integrated circuit bus (Inter-Integrated Circuit, IIC) Flash chip is used as a storage medium, it is required to use two Flash chips to respectively store the primary BIOS and the backup BIOS. In addition, for Flash chips of different types, the CPU reads the BIOS in different manners, and corresponding hardware switching circuits are also different. For example, for the SPI flash chip, when reading a BIOS, the CPU needs to send a chip select signal, and switch the chip select signal to a different Flash chip through a switching circuit, so as to read a corresponding BIOS; for the IIC Flash chip, when reading a BIOS, the CPU needs to switch, through the switching circuit, an address of the Flash chip to a default address read by the CPU.

To sum up, when a BIOS is read by additionally providing a hardware switching circuit in the prior art, an address for reading a BIOS program is unique, which often requires two Flash chips to respectively store a primary BIOS and a backup BIOS. In addition, for Flash chips of different types, a CPU reads the BIOS in different manners, and corresponding switching circuits are also different. As a result, universality of BIOS reading by additionally providing a switching circuit is poor, and a hardware cost is also high.

### SUMMARY

Embodiments of the present invention provide a method, an apparatus and a processor for reading a BIOS, which can solve a problem in the prior art when a BIOS is read by additionally providing a hardware switching circuit between a CPU and a storage chip.

In a first aspect, an embodiment of the present invention provides a method for reading a BIOS, including:
receiving a reset signal of a processor, and generating a first start address or a second start address according to the reset signal; and
reading a BIOS in a storage chip according to the first start address or the second start address,
where the first start address corresponds to a storage address of a primary BIOS stored in the storage chip, and the second start address corresponds to a storage address of a backup BIOS stored in the storage chip.

In a second aspect, an embodiment of the present invention provides an apparatus for reading a BIOS, including:
a start address generating module, configured to receive a reset signal of a processor, and generate a first start address or a second start address according to the reset signal; and
a BIOS reading module, configured to read a BIOS in a storage chip according to the first start address or the second start address,
where the first start address corresponds to a storage address of a primary BIOS stored in the storage chip, and the second start address corresponds to a storage address of a backup BIOS stored in the storage chip.

In a third aspect, an embodiment of the present invention provides a processor, including the apparatus for reading a BIOS that is provided in the preceding embodiment of the present invention, where the processor is further disposed with a reset signal pin, which is configured to receive a reset signal.

In a fourth aspect, an embodiment of the present invention provides a computer system, including a processor and a storage chip, where the processor is the processor provided in the preceding embodiment of the present invention, and the storage chip is configured to store a BIOS.

In the embodiment of the present invention, a first start address for reading a primary BIOS or a second start address for reading a backup BIOS may be generated according to a reset signal of a processor, so that when reading a BIOS, the processor may read a BIOS in a storage chip according to the first start address or the second start address. The BIOS is read according to different start addresses, so the primary BIOS and the backup BIOS can be stored in a same storage chip. In addition, storage chips of different types may be used to store the BIOS, and for storage chips of different types, the method according to this embodiment can be adopted to read the BIOS. Compared with the prior art where a BIOS is read by additionally providing a switching circuit, the method according to this embodiment has higher universality and reduces a hardware resource cost.

### BRIEF DESCRIPTION OF DRAWINGS

To describe the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and a person of ordinary skill in the art may still derive other drawings according to these accompanying drawings without creative efforts.
FIG. 1 is a schematic flowchart of a method for reading a BIOS according to a first embodiment of the present invention;
FIG. 2 is a schematic flowchart of a method for reading a BIOS according to a second embodiment of the present invention;
FIG. 3 is a schematic structural diagram of an apparatus for reading a BIOS according to a third embodiment of the present invention;
FIG. 4 is a schematic structural diagram of an apparatus for reading a BIOS according to a fourth embodiment of the present invention;
FIG. 5 is a schematic structural diagram of a processor according to a fifth embodiment of the present invention;
FIG. 6 is a schematic structural diagram illustrating the principle of a specific implementation of a processor according to a sixth embodiment of the present invention; and
FIG. 7 is a schematic structural diagram of a computer system according to a seventh embodiment of the present invention.

### DESCRIPTION OF EMBODIMENTS

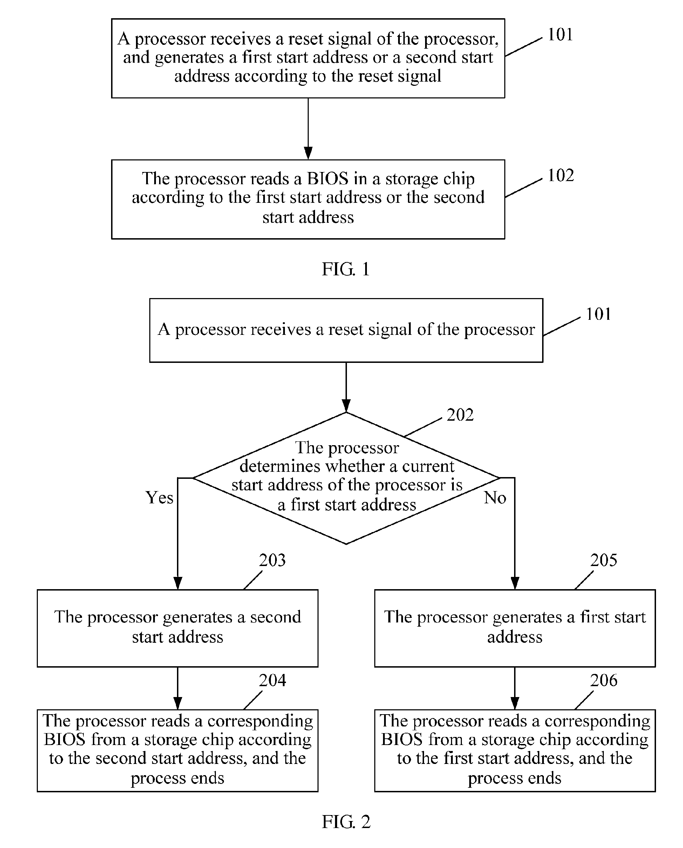

FIG. 1 is a schematic flowchart of a method for reading a BIOS according to a first embodiment of the present invention. The method of this embodiment is applied to a process where a processor (CPU) reads a BIOS when a computer system is started. Specifically, as shown in FIG. 1, the method of this embodiment may include the following steps:
Step 101: A processor receives a reset signal of the processor, and generates a first start address or a second start address according to the reset signal.
Step 102: The processor reads a BIOS in a storage chip according to the first start address or the second start address.

The first start address corresponds to a storage address of a primary BIOS stored in the storage chip, and the second start address corresponds to a storage address of a backup BIOS stored in the storage chip.

In this embodiment, the processor may be disposed with a start address generating module and a BIOS reading module. When receiving a reset signal, that is, a start signal when a computer system is started, the start address generating module may generate a first start address or a second start address according to the reset signal, so that the BIOS reading module may read a primary BIOS or a backup BIOS in a storage chip based on the first start address or the second start address.

A person skilled in the art may understand that the first start address and the second start address are preset addresses corresponding to the storage address of the primary BIOS and the storage address of the backup BIOS, and generally speaking, the first start address and the second start address are initial addresses of the primary BIOS and the backup BIOS. The processor may read a corresponding BIOS according to the initial addresses of the primary BIOS and the backup BIOS. In the method for reading a BIOS that is provided in this embodiment, a first start address for reading a primary BIOS or a second start address for reading a backup BIOS may be generated according to a reset signal of a processor, so that when reading a BIOS, the processor may read the BIOS in a storage chip according to the first start address or the second start address. The BIOS is read according to different start addresses, so the primary BIOS and the backup BIOS can be stored in a same storage chip. In addition, storage chips of different types may be used to store the BIOS, and for storage chips of different types, the method according to this embodiment can be adopted to read the BIOS. Compared with the prior art where a BIOS is read by additionally providing a switching circuit, the method according to this embodiment has higher universality and reduces a hardware resource cost.

FIG. 2 is a schematic flowchart of a method for reading a BIOS according to a second embodiment of the present invention. In this embodiment, upon arrival of a reset signal of a processor, a generated start address can be switched between a first start address and a second start address. Specifically, as shown in FIG. 2, the method of this embodiment may include the following steps:
Step 201: A processor receives a reset signal of the processor.
Step 202: The processor determines whether a current start address of the processor is a first start address; if yes, execute step 203; otherwise, when the current start address of the processor is a second start address, execute step 205.
Step 203: The processor generates a second start address.
Step 204: The processor reads a corresponding BIOS from a storage chip according to the second start address, and the process ends.
Step 205: The processor generates a first start address.
Step 206: The processor reads a corresponding BIOS from a storage chip according to the first start address, and the process ends.

In the foregoing step 201, the processor is disposed with a reset pin, that is, a reset signal receiving pin, and after a computer system is restarted, the reset pin may be set to a reset state, so as to generate the reset signal. Generally speaking, the reset signal is a low level applied to the reset pin, that is, when the computer system is restarted, a low-level signal is applied to the reset pin, and in a normal condition, a high-level signal is always provided to the reset pin.

The foregoing step 202 to step 206 specifically indicate that, upon receiving the reset signal of the processor, the processor can generate another start address different from a current start address, that is, when receiving the reset signal of the processor, if the current start address is the first start address, the generated another start address is the second start address, so that the backup BIOS can be acquired; and if the current start address is the second start address, the generated another start address is the first start address, so that the primary BIOS can be acquired. In this way, for each reset, a start address different from that generated in a previous reset is adopted, so as to acquire a corresponding BIOS from the storage chip.

A person skilled in the art may understand that, when the computer system is initially started, the processor receives the reset signal for the first time, and may generate the first start address by default to acquire the primary BIOS in the storage chip; and when the computer system is started again, the processor may generate the second start address different from the first start address to acquire the backup BIOS in the storage chip, so that after failing to be started from the primary BIOS, the processor can be started from the backup BIOS upon restart. In an actual application, the generating a first start address or a second start address according to the reset signal, specifically, may also be generating the first start address or the second start address by counting the number of resets; for example, when the number of resets, that is, the number of starts of the computer system, is an odd number, the first start address may be generated to read the primary BIOS, and when the number of resets is an even number, the second start address may be generated to read the backup BIOS, thereby ensuring normal operation of the computer system.

In this embodiment, the processor may be disposed with a start address register module, which can store the generated first start address or second start address into a start address register, so that the start address register transmits the first start address or the second start address to the BIOS reading module to read a BIOS in the storage chip. In this way, during normal operation of the processor, a soft start may be implemented by changing the start address in the start address register module.

In this embodiment, the processor may be further disposed with a start address configuring pin, and the computer system may input a corresponding start address configuring signal to the start address configuring pin, so that the processor may receive the reset signal of the processor and the start address configuring signal, and may generate the first start address or the second start address according to the start address configuring signal and the reset signal. The start address configuring signal is a signal used for indicating address ranges of the first start address and the second start address. In this way, because storage address ranges are different for BIOSs of different sizes, the start address configuring signal is set to effectively meet a requirement of reading BIOSs of various sizes. For details about a specific implementation, reference may be made to a description in the following embodiments.

In an actual application, the number of start address configuring pins may be set to two; in this way, different voltage signals may be applied to the two pins to indicate address ranges of the first start address and the second start address generated by the processor, and the reset signal is used by the processor to determine whether to specifically generate the first start address or the second start address.

In this embodiment, before the foregoing step 201 is executed, an enable signal may further be received, so that when the enable signal is received, the reset signal of the processor is received, and the first start address or the second start address is generated according to the reset signal. Specifically, the processor may be disposed with an enable pin, which is configured to input an enable signal, so as to determine whether the start address generating module in the processor is functional, and when there is an enable signal, the start address generating module may receive a reset signal and generate a start address according to the reset signal; otherwise, the start address may not be generated.

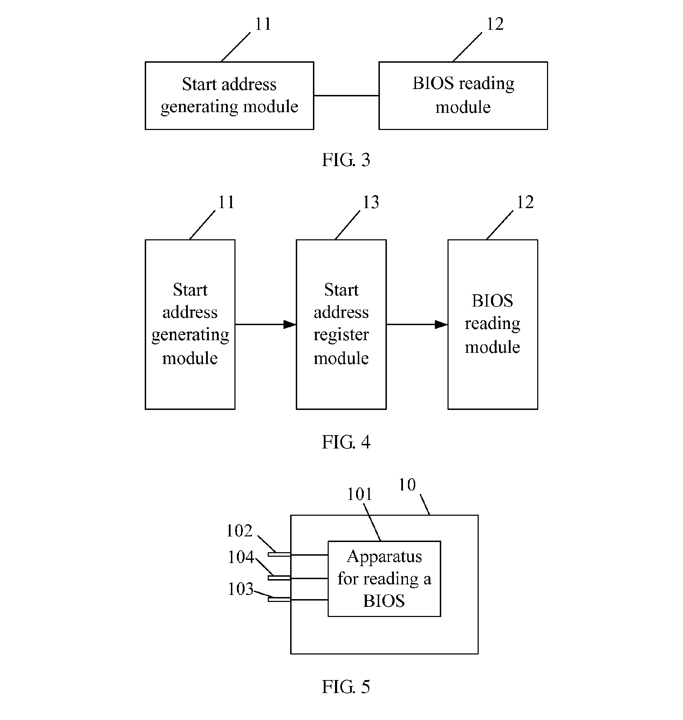

FIG. 3 is a schematic structural diagram of an apparatus for reading a BIOS according to a third embodiment of the present invention. As shown in FIG. 3, the apparatus for reading a BIOS in this embodiment may include a start address generating module 11 and a BIOS reading module 12.

The start address generating module 11 is configured to receive a reset signal of a processor, and generate a first start address or a second start address according to the reset signal.

The BIOS reading module 12 is configured to read a BIOS in a storage chip according to the first start address or the second start address.

The first start address corresponds to a storage address of a primary BIOS stored in the storage chip, and the second start address corresponds to a storage address of a backup BIOS stored in the storage chip.

The apparatus for reading a BIOS in this embodiment can generate, based on a reset signal of a processor, a start address used for reading a BIOS, and for a specific implementation process, reference may be made to the foregoing description of the method embodiments of the present invention.

In this embodiment, the start address generating module 11 may be specifically configured to generate another start address different from a current start address when receiving the reset signal of the processor, where when the current start address is the first start address, the generated another start address is the second start address, and when the current start address is the second start address, the generated another start address is the first start address. For a specific implementation, reference may be made to the foregoing description of the method embodiments of the present invention.

In this embodiment, the start address generating module 11 is implemented through a digital circuit, and specifically, may be implemented through a digital circuit formed by a trigger (or a counter), a selector and a register, where the register may include a plurality of start addresses, and the counter may control, by counting the reset signal, the selector to select a start address in the register. The trigger or counter may use the reset signal as an input signal, so that when the reset signal changes, an output signal of the trigger or counter will be switched between a low-level signal and a high-level signal, thereby controlling the selector to select the first start address or the second start address in the register. The BIOS reading module 12 is specifically a memory read interface or a read control interface, also referred to as a BIOS reading and executing module, a Flash controller, or the like, and may be configured to read data in the storage chip.

FIG. 4 is a schematic structural diagram of an apparatus for reading a BIOS according to a fourth embodiment of the present invention. On the basis of the foregoing technical solution of the embodiment shown in FIG. 3, as shown in FIG. 4, the apparatus in this embodiment may further include a start address register module 13, which is configured to store a first start address or a second start address, which is generated by a start address generating module 11, into a start address register, so that the start address register transmits the first start address or the second start address to a BIOS reading module 12 to read a BIOS in a storage chip.

In this embodiment, the start address register module 13 is disposed, so that the start address in the start address register may be modified through a computer operating system during normal operation of a computer system. During normal operation of the computer system, a BIOS may be acquired from a different start address, so as to restart the computer system. The start address register module 13 is disposed, so that the start address in a register of the register module 13 may be modified through software, and soft start may be performed. The start address register module 13 is specifically a register. Moreover, the start address register module 13 is disposed, so that a BIOS address currently read when a computer is started may also be read from the register of the start address register module 13 through software. When it is determined that a currently read BIOS address is an address of a backup BIOS, it indicates that a primary BIOS in the storage chip may be damaged. Therefore, the BIOS may be written to storage space of a primary BIOS address again through software, so that the primary BIOS can be read normally upon a next start.

On the basis of the technical solution of FIG. 3 or FIG. 4, in this embodiment, the start address generating module 11 may be specifically configured to receive the reset signal of the processor and a start address configuring signal, and generate the first start address or the second start address according to the address configuring signal and the reset signal. The start address configuring signal is a signal used for indicating address ranges of the first start address and the second start address. In this way, for BIOSs of different sizes, the address ranges of the first start address and the second start address may be determined through the start address configuring signal, thereby applicable to reading of BIOSs of different sizes. Specifically, when selecting a start address in the register, a selector in the start address generating module 11 may select a corresponding start address based on an output signal of a trigger (counter) and the start address configuring signal, where the register stores initial addresses of a plurality of start addresses, which will be described in detail in the following.

In the foregoing embodiment shown in FIG. 3 or FIG. 4, the start address generating module 11 may further receive an enable signal, so that only after receiving the enable signal, the start address generating module 11 operates to generate a start address in response to the reset signal.

FIG. 5 is a schematic structural diagram of a processor according to a fifth embodiment of the present invention. A processor 10 in this embodiment includes an apparatus 101 for reading a BIOS, and the processor is further disposed with a reset signal pin 102, which is configured to receive a reset signal. The apparatus 101 for reading a BIOS is specifically the apparatus for reading a BIOS that is shown in FIG. 3 or FIG. 4, and for a specific structure and function, reference may be made to the foregoing description of the embodiments of the present invention; the reset signal pin 102 is configured to receive, when a computer system is started, a signal, that is, a reset signal, which is generally a low-level signal, and may transmit the reset signal to the apparatus 101 for reading a BIOS, so that the apparatus for reading a BIOS may read a BIOS in a storage chip according to the reset signal.

In this embodiment, as shown in FIG. 5, the processor 10 may be further disposed with a start address configuring pin 103, which is configured to receive a start address configuring signal, where the start address configuring signal may specifically be a level signal applied to the start address configuring pin 103 when the computer system is started; specifically a start address generating module in the apparatus 101 for reading a BIOS may receive the reset signal of the processor from the reset signal pin 102 and the start address configuring signal from the start address configuring pin 103, and may generate a first start address or a second start address according to the address configuring signal and the reset signal, thereby implementing an operation of reading a primary BIOS or a backup BIOS.

In addition, as shown in FIG. 5, the processor 10 may be further disposed with an enable pin 104, which is configured to receive an enable signal, and specifically, only after receiving the enable signal, the start address generating module in the apparatus 101 for reading a BIOS may receive the reset signal of the processor, and generate the first start address or the second start address according to the reset signal. A person skilled in the art may understand that, when there is no enable signal at the enable pin 104, the computer system may start the primary BIOS in the storage chip according to a default address, which is generally the first start address, where the default address may be stored in an address register in the computer system, so that when the computer system is powered on and started, the primary BIOS may be started based on an address in the address register.

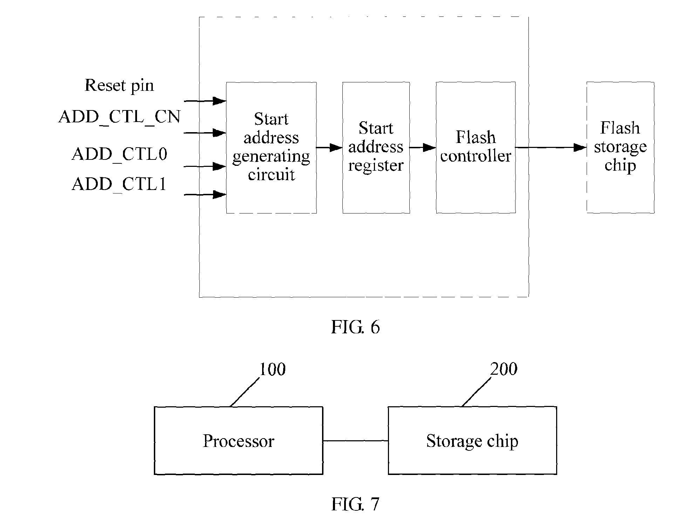

A person skilled in the art may understand that, in this embodiment, only functional parts involved when the processor reads a BIOS are described, and other functional parts of the processor may have a same or similar function as an existing processor, which is not limited by this embodiment. In an actual application, the processor of this embodiment may be obtained based on the existing processor by integrating functional modules in the apparatus 101 for reading a BIOS or by adding the functional modules. A person skilled in the art may understand that, a BIOS reading module in the apparatus 101 for reading a BIOS is an inherent functional module of the existing processor, and therefore, the apparatus for reading a BIOS, that is, other functional modules that are not included in the existing processor, is integrated on the processor, so as to implement a function of the apparatus for reading a BIOS, and all the functional parts are formed by a digital circuit and so on. FIG. 6 is a schematic structural diagram illustrating the principle of a specific implementation of a processor according to a sixth embodiment of the present invention. As shown in FIG. 6, the processor of this embodiment is disposed with a reset (RESET) pin, an enable pin (ADD_CFG_EN), and start address configuring pins (ADD_CFG0 and ADD_CFG1). These pins are all connected to a start address generating circuit (that is, the forgoing start address generating module), so that the start address generating circuit may generate a first start address or a second start address according to signals of these pins. The start address generating circuit is successively connected to a start address register (that is, the foregoing start address register module) and a Flash controller (that is, the foregoing BIOS reading module).

In this embodiment, when ADD_CFG_EN=1, the start address generating circuit may operate, and at this time, the start address generating circuit receives a reset signal from the reset pin and start address configuring signals from ADD_CFG0 and ADD_CFG1, so as to generate the first start address or the second start address according to the received reset signal and start address configuring signals, and read a primary BIOS or a backup BIOS from an external Flash storage chip.

In this embodiment, different voltage signals are applied to the pins ADD_CFG0 and ADD_CFG1, so as to determine address ranges of the first start address and the second start address; in this way, a plurality of different address ranges can be set through the start address configuring signals provided by the two pins, thereby applicable to reading of BIOSs of different sizes. Specifically, when ADD_CFG1=0 and ADD_CFG0=0, an initial address of the first start address may be set to 0, and an initial address of the second start address may be set to 1MBtyes-1. Such a type of configuration may be applicable to a BIOS reading scenario where the BIOS is smaller than or equal to 1MBtyes, and correspondingly, an initial address of the primary BIOS in the storage chip is 0, and an initial address of the backup BIOS in the storage chip is 1MBtyes-1. When ADD_CFG1=0 and ADD_CFG0=1, the initial address of the first start address may be set to 0, and the initial address of the second start address may be set to 2MBtyes-1, so that such a type of configuration may be applicable to a BIOS reading scenario where the BIOS is smaller than or equal to 2MBtyes. When ADD_CFG1=1 and ADD_CFG0=0, the initial address of the first start address may be set to 0, and the initial address of the second start address may be set to 4MBtyes-1, so that such a type of configuration may be applicable to a BIOS reading scenario where the BIOS is smaller than or equal to 4MBtyes. When ADD_CFG1=1 and ADD_CFG0=1, the initial address of the first start address may be set to 0, and the initial address of the second start address may be set to 8MBtyes-1, so that such a type of configuration may be applicable to a BIOS reading scenario where the BIOS is smaller than or equal to 8MBtyes.

A person skilled in the art may understand that, in different configuration scenarios of ADD_CFG[1:0], a corresponding specific range of the first start address or the second start address may be set according to a requirement, and for each processor, after the first start address and the second start address are determined, corresponding start address configuring signals may be always provided to the start address configuring pins when a computer system is started. For example, when the initial address of the first start address is set to 0 and the initial address of the second start address is set to 1MBtyes-1, it may be automatically set that ADD_CFG1=0 and ADD_CFG0=0 when the computer system is started.

A person skilled in the art may understand that, in an actual application, the number of start address configuring pins is not limited to two, and may also be one or more than two, which is not particularly limited in the embodiment of the present invention.

FIG. 7 is a schematic structural diagram of a computer system according to a seventh embodiment of the present invention. As shown in FIG. 7, the computer system of this embodiment includes a processor 100 and a storage chip 200, where the processor 100 is the processor shown in FIG. 5 or

FIG. 6, and the storage chip 200 is configured to store a primary BIOS and a backup BIOS that are described in the foregoing. The storage chip 200 may be a storage chip of any type, for example, may be a serial-interface storage chip such as an SPI Flash storage chip, an IIC Flash storage chip, or a system management bus (System Management Bus, SMBUS), or may be a parallel-interface storage chip such as a Local Bus storage chip, or may be an NAND interface storage chip, or may be a nonvolatile EPROM storage chip.

In the several embodiments provided in the present application, it should be understood that the disclosed system, apparatus, and method may be implemented in other manners. For example, the described apparatus embodiment is merely exemplary. For example, dividing of the units is merely a type of logical function dividing, and there may be other dividing manners during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electronic, mechanical, or other forms.

In addition, functional units in the embodiments of the present invention may be integrated into one processing unit, each of the units may exist alone physically, and two or more units are integrated into one unit. The integrated unit may be implemented in a form of hardware, or may be implemented in a form of a software functional unit.

When the integrated unit are implemented in a form of a software functional unit and sold or used as an independent product, the integrated unit may be stored in a computer-readable storage medium. Based on such understanding, the technical solutions of the present invention essentially, or the part contributing to the prior art, or all or a part of the technical solutions may be embodied in a form of a software product. The computer software product is stored in a storage medium, and includes several instructions for instructing a computer device (which may be a personal computer, a server, a network device, or the like) to perform all or a part of the steps of the methods described in the embodiments of the present invention. The foregoing storage medium includes: any medium that is capable of storing program codes, such as a USB flash disk, a removable hard disk, a read-only memory (Read-Only Memory, ROM), a random access memory (Random Access Memory, RAM), a magnetic disk, or an optical disk.

A person of ordinary skill in the art may understand that, all or a part of the steps of the foregoing method embodiments may be implemented by a program instructing relevant hardware. The foregoing program may be stored in a computer readable storage medium. When the program runs, the steps of the foregoing method embodiments are performed. The foregoing storage medium includes various mediums capable of storing program codes, such as a ROM, a RAM, a magnetic disk, or an optical disk.

Finally, it should be noted that the foregoing embodiments are merely intended for describing the technical solutions of the present invention, rather than limiting the present invention. Although the present invention is described in detail with reference to the foregoing embodiments, a person of ordinary skill in the art should understand that he may still make modifications to the technical solutions recorded in the foregoing embodiments, or make equivalent replacements to part of or all the technical features of the technical solutions recorded in the foregoing embodiments; however, these modifications or replacements do not make the essence of the corresponding technical solution depart from scope of the technical solutions of the embodiments of the present invention.

## Claims

1. A method for reading a BIOS, comprising:
receiving a reset signal of a processor, and generating a first start address or a second start address according to the reset signal; and
reading a BIOS in a storage chip according to the first start address or the second start address,
wherein the first start address corresponds to a storage address of a primary BIOS stored in the storage chip, and the second start address corresponds to a storage address of a backup BIOS stored in the storage chip.

2. The method for reading a BIOS according to claim 1, wherein the receiving a reset signal of a processor, and generating a first start address or a second start address according to the reset signal specifically comprises:
generating another start address different from a current start address when receiving the reset signal of the processor, wherein when the current start address is the first start address, the another start address is the second start address, and when the current start address is the second start address, the another start address is the first start address.

3. The method for reading a BIOS according to claim 1 or 2, wherein before the reading a BIOS in a storage chip according to the first start address or the second start address, the method further comprises:
storing the generated first start address or second start address into a start address register, so that the start address register transmits the first start address or the second start address to a BIOS reading module to read a BIOS in the storage chip.

4. The method for reading a BIOS according to any one of claims 1 to 3, wherein the receiving a reset signal of a processor, and generating a first start address or a second start address according to the reset signal specifically comprises:
receiving the reset signal of the processor and a start address configuring signal, and generating the first start address or the second start address according to the address configuring signal and the reset signal.

5. The method for reading a BIOS according to claim 4, wherein the start address configuring signal is a signal used for indicating address ranges of the first start address and the second start address.

6. The method for reading a BIOS according to any one of claims 1 to 3, wherein before the receiving a reset signal of a processor, and generating a first start address or a second start address according to the reset signal, the method further comprises:
receiving an enable signal, so that when the enable signal is received, the reset signal of the processor is received, and the first start address or the second start address is generated according to the reset signal.

7. An apparatus for reading a BIOS, comprising:
a start address generating module, configured to receive a reset signal of a processor, and generate a first start address or a second start address according to the reset signal; and
a BIOS reading module, configured to read a BIOS in a storage chip according to the first start address or the second start address,
wherein the first start address corresponds to a storage address of a primary BIOS stored in the storage chip, and the second start address corresponds to a storage address of a backup BIOS stored in the storage chip.

8. The apparatus for reading a BIOS according to claim 7, wherein the start address generating module is specifically configured to generate another start address different from a current start address when receiving the reset signal of the processor, wherein when the current start address is the first start address, the another start address is the second start address, and when the current start address is the second start address, the another start address is the first start address.

9. The apparatus for reading a BIOS according to claim 7 or 8, further comprising:
a start address register module, configured to store the generated first start address or second start address into a start address register, so that the start address register transmits the first start address or the second start address to the BIOS reading module to read a BIOS in the storage chip.

10. The apparatus for reading a BIOS according to any one of claims 7 to 9, wherein the start address generating module is specifically configured to receive the reset signal of the processor and a start address configuring signal, and generate the first start address or the second start address according to the address configuring signal and the reset signal.

11. The apparatus for reading a BIOS according to claim 10, wherein the start address configuring signal is a signal used for indicating address ranges of the first start address and the second start address.

12. A processor, comprising the apparatus for reading a BIOS according to any one of claims 7 to 9, wherein the processor is further disposed with a reset signal pin, configured to receive a reset signal.

13. The processor according to claim 12, wherein the processor is further disposed with a start address configuring pin, which is configured to receive a start address configuring signal; and
a start address generating module in the apparatus for reading a BIOS is specifically configured to receive the reset signal of the processor and receive the start address configuring signal from the start address configuring pin, and generate the first start address or the second start address according to the address configuring signal and the reset signal.

14. The processor according to claim 12, wherein the processor is further disposed with an enable pin, which is configured to receive an enable signal; and
a start address generating module in the apparatus for reading a BIOS is specifically configured to receive an enable signal, so that when the enable signal is received, the reset signal of the processor is received, and the first start address or the second start address is generated according to the reset signal.

15. A computer system, comprising a processor and a storage chip, wherein the processor is the processor according to claim 12, 13 or 14, and the storage chip is configured to store a BIOS.
